# EUROPEAN PATENT APPLICATION

(11) **EP 1 367 562 A2**
(43) Date of publication of application: **03.12.2003**
(21) Application number: 03010604.1
(22) Date of filing: 12.05.2003
(51) Int. Cl.: G10L 11/02, H04L 12/64

(54) **Method and apparatus for audio data communication with non-audio area detection**

(30) Priority: 30.05.2002 JP 2002157740
(71) Applicant: Kabushiki Kaisha Toshiba, Tokyo (JP)
(72) Inventor: Oosawa, Hajime, 1-chome, Minato-ku, Tokyo 105-8001 (JP)
(74) Representative: Henkel, Feiler, Hänzel

(57) **Abstract**

Disclosed is a system for transmitting audio data from a transmitter (1) to a receiver (2) in radio data communication. On detecting a non-audio data area of a predetermined amount of data, a non-audio detection unit (13) included in the transmitter (1) notifies a communication control unit (12) of the detection. The communication control unit (12) disconnects the radio communication connection with the receiver (2) for a period corresponding to the non-audio period (non-audio data area). When the non-audio data area disappears from the radio data, the communication control unit (12) re-establishes the radio communication connection.

## Description

The present invention generally relates to audio data communication apparatuses, and more particularly pertains to a communication control method for controlling transmission of audio data in a non-audio data area.

In recent years, portable or simplified systems for wireless audio communication have been realized using a radio communication technique based on short-range radio communication standards such as Bluetooth (registered trademark). Specifically, according to the systems, wireless audio communication is provided between, for example, a mobile phone or a mobile audio gateway device (hereinafter referred to as an AG device) and a headset device (hereinafter referred to as an HS device).

For communication connecting systems based on the Bluetooth standards, communication connection methods called an asynchronous connection-less (ACL) link and a synchronous connection-oriented (SCO) link are provided.

The ACL link is an asynchronous connection method without previously selecting a radio band. According to the ACL link, if data includes an error, retransmission is carried out to ensure data integrity. The SCO link is a synchronous connection method for previously selecting a predetermined radio band and conducting communication at predetermined intervals. The SCO link is particularly used for communication such as real-time audio data communication. The foregoing wireless audio communication can be realized using the SCO link.

When audio data communication is performed by the radio communication system using the SCO link, audio data is transferred from, for example, an AG device to an HS device at predetermined intervals. If communication with the SCO link is established, audio data is successively transferred.

However, in the audio data communication, a state without any sound of a predetermined level or higher (non-audio state, silent State, or no-audible state) often occurs. In the normal radio communication method, if data includes audio data in a non-audio area (non-audio data area), the data transfer operation is continued as it is. When such useless data transfer frequently occurs, power consumption of the useless data transfer operation is not negligible.

In order to solve the above problem, according to a related art (refer to, for example, Jpn. Pat. Appln. KOKAI Publication No. 7-22994), a non-audio period (non-audio data area) is detected from audio data and the level of radio transmission power in non-audio data transmission is lower than that in audio data transmission. However, the power consumption cannot always be reduced effectively by merely reducing the radio transmission power level in response to the detection of the non-audio period. Particularly, if a short non-audio period often occurs, the frequency of switching control of the power level is high, resulting in a deterioration in the efficiency of communication.

In accordance with an object of the present invention, there is provided an audio data communication apparatus and method for disconnecting a communication connection to interrupt transmission of audio data when a non-audio area is generated for a predetermined time during audio data communication.

The audio data communication apparatus includes: a data communication unit which transmits data including audio data and non-audio data to a receiver, with which a communication connection is established; a non-audio detection unit which detects a non-audio data area in the data; and a communication control unit which effects such control that, when the non-audio detection unit detects a non-audio data area having a predetermined amount of data, the communication connection with the receiver is disconnected for a period corresponding to the transmission period of the non-audio data area.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an essential part of an audio data communication system according to an embodiment of the present invention;
FIGS. 2 and 3 are. timing charts for explaining a radio communication connection procedure according to the present embodiment;
FIG. 4 is a timing chart for explaining a communication connection procedure concerned with a non-audio detection processing according to the present embodiment;
FIG. 5 is a diagram for explaining a state of a buffer concerned with the non-audio detection processing; and
FIG. 6 is a flowchart for explaining the audio data communication operation according to the present embodiment.

An embodiment of the present invention will now be described with reference to the drawings.

### (Structure of Audio Data Communication System)

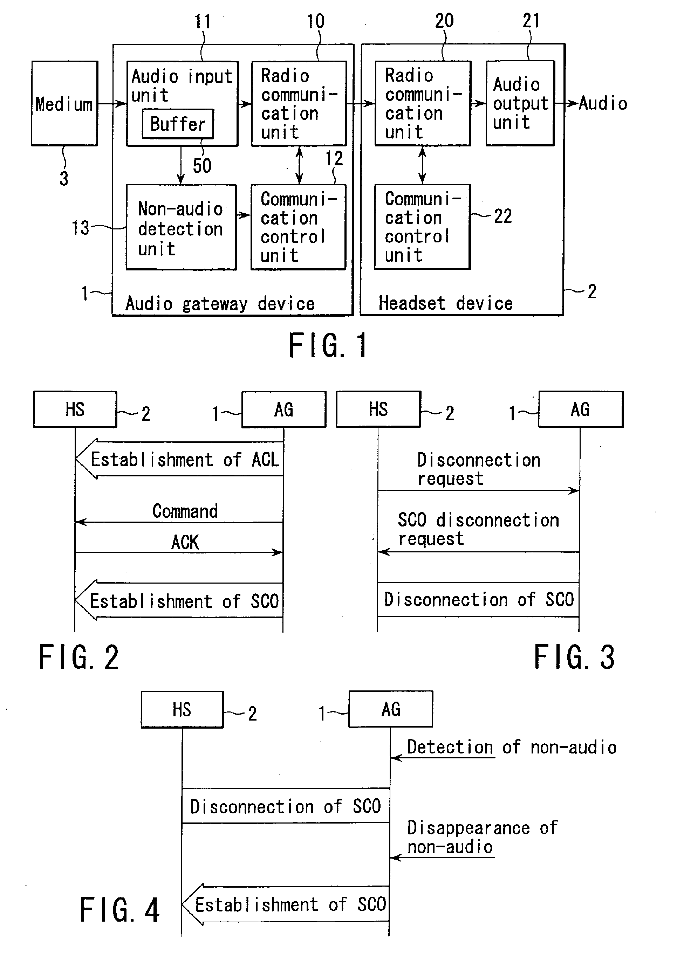

FIG. 1 is a block diagram showing an essential part of an audio data communication system according to the present embodiment.

According to the invention, a short-range radio data communication system (based on, for example, the Bluetooth standard) comprises an audio gateway (AG) device 1 and a headset (HS) device 2. Audio data communication is performed between the AG device 1 and the HS device 2.

The AG device 1 comprises a radio communication unit 10, an audio input unit 11, a communication control unit 12, and a non-audio detection unit 13.

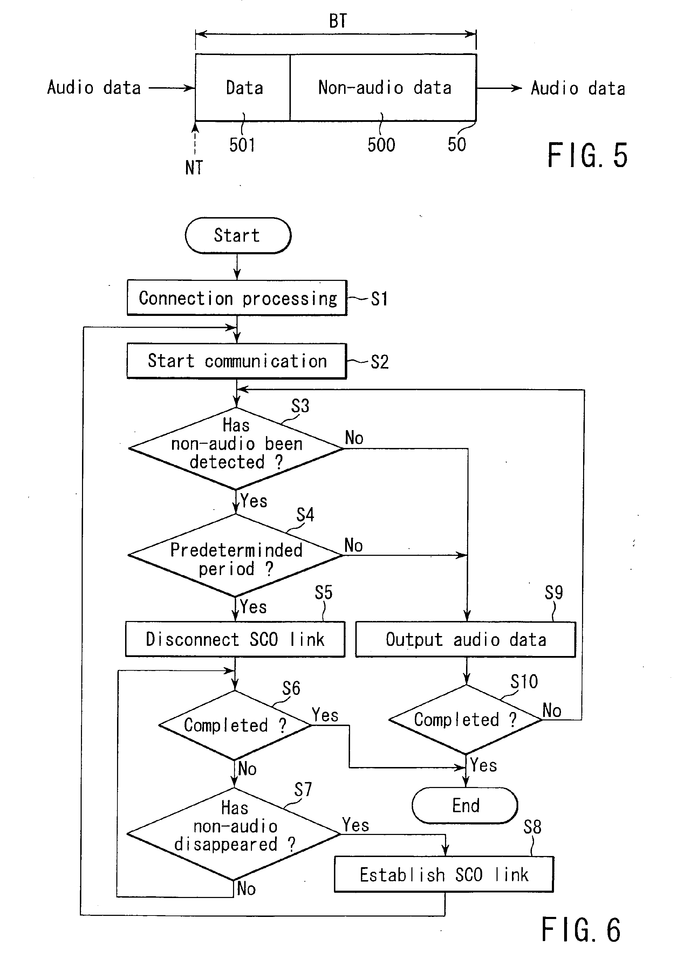

The radio communication unit 10 and the communication control unit 12 operate as a radio data communication function. The audio input unit 11 is connected to a recording medium 3 such as an IC memory or a disk recording medium. The audio input unit 11 receives audio signals (including music data comprising PCM signals) from the medium 3. The audio input unit 11 has a function of converting the audio signal into audio data in a predetermined digital format. Further, the audio input unit 11 includes a buffer 50 which temporarily stores the converted audio data in the digital format (refer to FIG. 5).

The radio communication unit 10 transmits the audio data (including a non-audio data area serving as a non-audio interval, which will be described later) stored in the buffer 50 of the audio input unit 11 to the HS device 2 serving as a communication destination under control through the communication control unit 12.

The non-audio detection unit 13 detects a non-audio data area from the audio data stored in the buffer 50 of the audio input unit 11. The non-audio detection unit 13 notifies the communication control unit 12 of the detection result. In other words, the non-audio detection unit 13 has a function of discriminating between an audio data area and the non-audio data area on the basis of an audio signal level of audio data. Specifically, the non-audio detection unit 13 includes a microprocessor (CPU) which allows software to execute a process of, for example, discriminating between the audio data area and the non-audio area.

The audio input unit 11 can be connected to not only the recording medium 3 but also an audio output device such as a mobile phone. The audio input unit 11 can also receive an audio signal and a music signal from the audio output device.

In the system according to the present embodiment, the AG device 1 serves as a transmitter and the HS device 2 functions as a receiver. The HS device 2 comprises a radio communication unit 20 for communicating with the radio communication unit 10 of the AG device 1 by radio, an audio output unit 21, and a communication control unit 22.

The audio output unit 21 converts audio data received by the radio communication unit 20 into an analog audio signal and generally generates the signal to a speaker. The radio communication unit 20 and the communication control unit 22 operate as a radio data communication function based on the same radio communication standards (for instance, the Bluetooth standard) as that of the AG device 1.

### (Communication Connection Procedure)

A communication connection procedure in a case where the present system uses a communication connection method based on the Bluetooth standard will now be described with reference to FIGS. 2 and 3.

Referring to FIG. 2, the AG device 1 transmits an ACL link establishment request to the HS device 2. In response to the request, an ACL link is established between the AG device 1 and the HS device 2.

Further, the AG device 1 transmits a call command to the HS device 2 through the ACL link. The HS device 2 transmits an acknowledgement (ACK) in response to the command. When receiving the acknowledgement, the AG device 1 generates an SCO link establishment request to the HS device 2. Consequently, the SCO link is established, thus starting to transfer audio data from the AG device 1 to the HS device 2.

Referring to FIG. 3, when receiving a disconnection request from the HS device 2, the AG device 1 generates an SCO link disconnection request. Consequently, the SCO link is disconnected, thus interrupting the communication of audio data between the AG device 1 and the HS device 2.

### (Communication Control Operation of Audio Data)

The communication control operation of the present system will now be described with reference to FIGS. 4, 5, and 6.

In accordance with the foregoing procedure shown in FIG. 2, a communication connection processing of establishing the ACL link and the SCO link between the AG device 1 and the HS device 2 is executed (step S1). The AG device 1 converts an audio signal supplied from the recording medium 3 into audio data and then starts communication with the HS device 2, the communication including transfer of the audio data (step S2).

Referring to FIG. 5, in the AG device 1, the audio input unit 11 stores the audio data converted in the predetermined digital data format into the FIFO buffer 50. The audio input unit 11 sequentially transfers data from the buffer 50 to the radio communication unit 10.

In this instance, the non-audio detection unit 13 detects the non-audio data area (non-audio data 500) in the audio data input to the buffer 50 (step S3). In other words, the non-audio detection unit 13 discriminates between the audio data area and the non-audio data area of the audio data to be stored in the buffer 50.

The communication control unit 12 controls the radio communication unit 10 to transmit useful audio data, transferred from the audio input unit 11, to the HS device 2 (step S9, if NO in step S3). When the transmission operation of all audio data is completed, the communication control unit 12 terminates the communication operation (step S10).

On the other hand, when the non-audio detection unit 13 detects the non-audio data area from the audio data at predetermined timing (NT) and the non-audio data area continues for a predetermined period, the non-audio detection unit 13 notifies the communication control unit 12 of the detection (YES in step S4). As shown in FIG. 5, the predetermined period corresponds to a predetermined proportion of the amount of non-audio data 500 to the capacity (BT) of the buffer 50. Referring to FIG. 5, a data area 501 is shown subsequent to the non-audio data area 500.

In response to the information from the non-audio detection unit 13, the communication control unit 12 allows the radio communication unit 10 to disconnect the SCO link in accordance with the procedure shown in FIG. 3 (step S5). Thus, the transfer of audio data from the AG device 1 to the HS device 2 is interrupted. As a matter of course, while the SCO link is being disconnected, audio reproduction is suspended in the HS device 2.

Subsequently, when detecting the audio data area (501) subsequent to the non-audio data area (500), the non-audio detection unit 13 notifies the communication control unit 12 that the non-audio data disappears (YES in steps S6 and S7). Consequently, as shown in FIG. 4, the communication control unit 12 re-establishes the SCO link between the AG device 1 and the HS device 2 (step S8). Therefore, the transfer of audio data from the AG device 1 to the HS device 2 is restarted. Thus, audio reproduction is restarted in the HS device 2.

As mentioned above, in the present system, during the transfer of audio data from the AG device 1 (transmitter) to the HS device 2 (receiver) with radio communication, if a non-audio data area is generated in audio data, a communication connection corresponding to, for example, the establishment of the SCO link is disconnected. Therefore, since the transfer of the non-audio data area is stopped for a non-audio period in the audio data communication, useless data transfer can be avoided. Thus, the power consumption of the useless data transfer can be cut.

In the present system, when the non-audio data area continues for a predetermined period (the predetermined amount of data), the communication connection is disconnected. Accordingly, if a relatively short-time non-audio data area is often generated, the communication connection is held as it is. Therefore, it is possible to avoid a case where the disconnection of the communication connection and the establishment thereof are frequently performed, resulting in deterioration of the communication efficiency.

Accordingly, the present invention is effectively used for audio communication in an audio gateway device or a mobile phone using a battery having a limited capacity. Since the deterioration of the communication efficiency can be minimized, the present invention can be effectively used for real-time audio communication.

The communication control unit 12 of the AG device 1 controls to switch the disconnection and the establishment of the SCO link in accordance with the detection result supplied from the non-audio detection unit 13. When the disconnected SCO link is changed into the establishment state, the communication control unit 12 controls so that the head of a restarted audio output is not cut or the audio reproduction is not delayed.

According to the present embodiment, the audio data communication between the AG device 1 and the HS device 2 has been described. The present invention is not limited to the case. The present invention can also be applied to audio communication between personal computers and mobile phones. For the communication connection method, the application of the radio communication standards based on the Bluetooth standard have been described. The present invention is not limited to the case. Other communication standards can be used.

As mentioned above, according to the present embodiment, if a predetermined non-audio period continues in audio data communication, a communication connection is disconnected to interrupt the audio data communication operation. Consequently, power consumption in the communication operation for the non-audio period can be cut. In this instance, if a short non-audio period occurs very often, the communication connection is maintained, thus preventing deterioration of the communication efficiency. Therefore, in the audio data communication, useless data transfer for the non-audio period can be avoided, deterioration of the communication efficiency can be prevented, and power consumption can be effectively reduced in the communication operation.

## Claims

1. An audio data communication apparatus **characterized by** comprising:
a data communication unit (10) which transmits data including audio data and non-audio data to a receiver (2), with which a communication connection is established;
a non-audio detection unit (13) which detects a non-audio data area in the data; and
a communication control unit (12) which effects such control that, when the non-audio detection unit (13) detects a non-audio data area having a predetermined amount of data, the communication connection with the receiver (2) is disconnected for a period corresponding to the transmission period of the non-audio data area.

2. The apparatus according to claim 1, **characterized in that**
the communication control unit (12) effects such control that when an area of data to be transmitted by the data communication unit (10) changes from a non-audio data area to an audio data area, the communication connection with the receiver (2) is reestablished.

3. The apparatus according to claim 1, **characterized in that**
the communication control unit (12) executes to establish or disestablish a radio communication connection according to a predetermined radio communication protocol between the data communication unit (10) and the receiver (2).

4. The apparatus according to claim 1, **characterized by** further comprising:
an audio input unit (11) which converts an externally-supplied audio signal into audio data in a predetermined digital data format, wherein
the data communication unit (10) transmits the audio data transmitted from the audio input unit (11) to the receiver (2) with which the communication connection is established.

5. The apparatus according to claim 1, **characterized by** further comprising:
a buffer (50) which temporarily stores the data to be transmitted, wherein
when the amount of data corresponding to a non-audio data area in the data stored in the buffer (50) exceeds a predetermined reference value, the non-audio detection unit (13) notifies the communication control unit (12) of the detection of the non-audio data area.

6. The apparatus according to claim 2, **characterized by** further comprising:
a buffer (50) which temporarily stores the data to be transmitted, wherein
when the data stored in the buffer (50) changes from a non-audio data area to an audio data area, the non-audio detection unit (13) notifies the communication control unit (12) of the disappearance of the non-audio data area.

7. The apparatus according to claim 1, **characterized by** further comprising:
an audio input unit (11) which converts an externally-supplied audio signal into audio data in a predetermined digital data format and which includes a buffer (50) which temporarily stores the audio data, wherein
the data communication unit (10) receives the audio data stored in the buffer (50) from the audio input unit (11) and then transmits the audio data to the receiver (2) with which the communication connection is established.

8. The apparatus according to claim 1, **characterized by** further comprising:
an audio input unit (11) which is connected to a recording medium (3) wherein audio signals can be stored and which converts an audio signal supplied from the recording medium (3) into audio data in a predetermined digital data format, wherein
the data communication unit (10) transmits the audio data generated to the audio input unit (11) to the receiver (2) with which the communication connection is established.

9. The apparatus according to claim 1, **characterized by** further comprising:
an audio input unit (11) which is connected to a recording medium (3) wherein audio signals are stored and which converts an audio signal supplied from the recording medium (3) into audio data in a predetermined digital data format, wherein
the data communication unit (10) transmits the audio data generated by the audio input unit (11) to the receiver (2) which is included in an audio reproduction device and with which the communication connection is established.

10. A method of controlling audio data communication between a transmitter (1) and a receiver (2), the method **characterized by** comprising:
establishing a radio communication connection between the transmitter (1) and the receiver (2) on the basis of a predetermined communication protocol; (S1)
detecting a non-audio data area having a predetermined amount of data from data including audio data and non-audio data when the transmitter (1) transmits the audio data to the receiver (2); (S3) and
disconnecting the radio communication connection between the transmitter (1) and the receiver (2) for a period corresponding to the transmission period of the detected non-audio data area. (S5)

11. The method according to claim 10, **characterized by** further comprising:
in the transmitter (1), re-establishing the radio communication connection between the transmitter (1) and the receiver (2) when the area of data changes from the detected non-audio data area to an audio data area. (S7, S8)

12. The method according to claim 10, **characterized by** further comprising:
in the transmitter (1), converting an externally-supplied audio signal into audio data in a predetermined digital data format; and
transmitting the audio data to the receiver (2) with which the radio communication connection is established. (S9)

13. The method according to claim 10, **characterized by** further comprising:
in the transmitter (1), temporarily storing the data in a buffer (50); and
detecting a non-audio data area when the amount of data corresponding to the non-audio data area in the data stored in the buffer (50) exceeds a predetermined reference value. (S3)

14. The method according to claim 10, **characterized by** further comprising:
in the transmitter (1), temporarily storing the data in a buffer (50); and
re-establishing the radio communication connection with the receiver (2) when the area of data stored in the buffer (50) changes from the detected non-audio data area to an audio data area. (S7, S8)

15. The method according to claim 10, **characterized by** further comprising:
in the transmitter (1), converting an externally-supplied audio signal into audio data in a predetermined digital data format and then storing the audio data in a buffer (50); and
transmitting the audio data stored in the buffer (50) to the receiver (2) with which the radio communication connection is established.

16. The method according to claim 10, **characterized by** further comprising:
connecting the transmitter (1) to a recording medium (3) wherein audio signals are stored and converting an audio signal supplied from the recording medium (3) into a predetermined digital data format; and
transmitting the audio data to the receiver (2) with which the communication connection is established.
